# EUROPÄISCHE PATENTSCHRIFT

(11) **EP 3 878 520 B1**
(45) Veröffentlichungstag und Bekanntmachung des Hinweises auf die Patenterteilung: **07.06.2023**
(21) Anmeldenummer: 21161522.4
(22) Anmeldetag: 09.03.2021
(51) Int. Cl.: A62B 3/00, H04W 4/80, H04W 4/02, H04W 4/90

(54) **VERFAHREN ZUM BETREIBEN EINES RETTUNGSSYSTEMS MIT EINEM MOBILEN RETTUNGSGERÄT**
METHOD FOR OPERATING A RESCUE SYSTEM WITH A MOBILE RESCUE DEVICE
PROCÉDÉ DE FONCTIONNEMENT D'UN SYSTÈME DE SAUVETAGE DOTÉ D'UN APPAREIL MOBILE DE SAUVETAGE

(30) Priorität: 10.03.2020 AT 501962020
(43) Veröffentlichungstag der Anmeldung: 15.09.2021
(73) Patentinhaber: Weber-Hydraulik GmbH, 4460 Losenstein (AT)
(72) Erfinder: ALLINGER, Patrick, 4400 Steyr (AT); DIEKMANN, Hanno, 71665 Vaihingen/Enz (DE); EDER, Josef, 4521 Schiedlberg (AT)
(74) Vertreter: Burger, Hannes

(56) Entgegenhaltungen:
- WO-A1-2017/190799
- ES-U- 1 154 011
- US-A1- 2014 107 853
- US-A1- 2017 057 040
- US-A1- 2017 252 911
- NoodleTail: "KILLERDRONE! Flying chainsaw", , 31. März 2016 (2016-03-31), Seiten 1-2, XP054979663, Gefunden im Internet: URL:https://www.youtube.com/watch?v=6Viwwe tf0gU [gefunden am 2019-09-09]
- namredrum: "Remote Control Chainsaw (Husqvarna 266xp)", , 6. Oktober 2010 (2010-10-06), Seite 1, XP054982360, Gefunden im Internet: URL:https://www.youtube.com/watch?v=N7lmUc KRdJE [gefunden am 2021-10-14]

## Beschreibung

Die Erfindung betrifft ein Rettungssystem mit einem mobilen Rettungsgerät, sowie ein Verfahren zum Betreiben des Rettungssystems.

Aus der AT 520046 A1 ist ein gattungsgemäßes mobiles Rettungsgerät bekannt. An derartige Rettungsgeräte wird die Anforderung gestellt, dass sie einerseits einen robusten und somit einfachen Aufbau aufweisen müssen, und darüber hinaus eine einfache Bedienung ermöglichen sollen. Andererseits soll das mobile Rettungsgerät eine Vielzahl an Einstellungsmöglichkeiten bieten, um an die komplexen Anforderungen eines Rettungseinsatzes anpassbar zu sein. Diese Kombination der Anforderungen in einem mobilen Rettungsgerät konnte bisher noch nicht realisiert werden.

Die US 2017/0057040 A1 offenbart ein handbetriebenes Crimp-Werkzeug. Die US 2017/0252911 A1 offenbart ein handbetriebenes Crimp-Werkzeug. Die US 2014/0107853 A1 offenbart ein akkubetriebenes Handwerkzeug. Die ES 1 154 011 U offenbart ein Sicherheitssystem für Kettensägen. Die WO 2017/190799 A1 offenbart ein mobiles Rettungsgerät.

Aufgabe der vorliegenden Erfindung war es, die Nachteile des Standes der Technik zu überwinden und eine Vorrichtung und ein Verfahren zur Verfügung zu stellen, in welchem alle obig beschriebenen Vorteile miteinander kombiniert werden können.

Diese Aufgabe wird durch ein Verfahren und eine Vorrichtung gemäß den Ansprüchen gelöst.

Erfindungsgemäß ist ein Verfahren zum Betreiben eines Rettungssystems mit einem mobilen Rettungsgerät, insbesondere Spreizgerät, Schneidgerät oder Kombigerät mit Schneid- sowie Spreizfunktion, vorgesehen. Das Verfahren umfasst die Verfahrensschritte:
- Bereitstellen des mobilen Rettungsgerätes, welches einen Grundkörper mit einem Arbeitsmittel, einem Haltegriff, einer Steuerung und ein am Grundkörper angeordnetes Eingabemittel aufweist;
- Steuern des Arbeitsablaufes des mobilen Rettungsgerätes durch Eingeben von Steuerbefehlen in die Steuerung mittels des am Grundkörper angeordneten Eingabemittels. Durch ein externes Zusatzeingabemittel werden mittels eines Datenübertragungsmittels externe Steuerbefehle in die Steuerung eingegeben, welche zusätzlich zu den mittels des Eingabemittels eingegebenen Steuerbefehlen den Arbeitsablauf des Arbeitsmittels steuern oder den Zustand des mobilen Rettungsgerätes verändern.

Das erfindungsgemäße Verfahren bringt den Vorteil mit sich, dass durch das externe Zusatzeingabemittel in die Steuerung des mobilen Rettungsgerätes eingegriffen werden kann, wodurch sich der Bediener des mobilen Rettungsgerätes im Einsatzfall bestmöglich auf die ihm zugedachte Bergetätigkeit konzentrieren kann. Gleichzeitig wird das externe Zusatzeingabemittel von einer erfahrenen Person, wie etwa einem Einsatzleiter, bedient, welche die Gesamtheit des Bergeablaufes im Überblick behält. Durch diese Maßnahmen kann die Arbeitssicherheit während der Bergung eines verunfallten Fahrzeuges erhöht werden. Darüber hinaus können durch diese Maßnahmen Rettungseinsätze koordinierter und schneller erfolgen, wodurch das Leben der im verunfallten Fahrzeug eingeklemmten Personen geschützt werden kann.

Weiters ist vorgesehen, dass das externe Zusatzeingabemittel in Echtzeit auf das mobile Rettungsgerät einwirkt bzw. die Datenübertragung zwischen dem externen Zusatzeingabemittel und dem mobilen Rettungsgerät in Echtzeit erfolgt.

Weiters ist vorgesehen, dass mittels des Zusatzeingabemittels trotz Betätigung des Eingabemittels der Arbeitsablauf des mobilen Rettungsgerätes unterbrochen wird. Durch diese Maßnahme kann die Arbeitssicherheit bei der Bedienung des mobilen Rettungsgerätes weiter erhöht werden. Insbesondere kann dadurch erreicht werden, dass sich die Einsatzkraft, welche das mobile Rettungsgerät bedient, ausschließlich auf die ihr zugewiesene Aufgabe konzentrieren muss. Bei Auftreten einer Gefahr, wie etwa dem Abrutschen des Fahrzeuges, kann von einer externen Person, welche den Überblick behält, eingegriffen werden. Besonders das Unterbrechen des Arbeitsablaufes kann eine wichtige Maßnahme zur Erhöhung der persönlichen Sicherheit sein.

Ferner kann vorgesehen sein, dass mittels des Zusatzeingabemittels die Geschwindigkeit des Arbeitsablaufes des mobilen Rettungsgerätes angepasst wird. Besonders in heiklen Situationen bzw. wenn mehrere mobile Rettungsgeräte gleichzeitig im Einsatz sind, kann es aus Gründen der Arbeitssicherheit sinnvoll sein, wenn die Geschwindigkeit des Arbeitsablaufes nicht nur lokal am mobilen Rettungsgerät angepasst wird, sondern wenn zusätzlich mittels des externen Zusatzeingabemittels die Geschwindigkeit des Arbeitsablaufes koordiniert angepasst werden kann. Dies kann insbesondere dann von Vorteil sein, wenn das mobile Rettungsgerät von Personen mit nur geringer Erfahrung bedient wird.

Darüber hinaus kann vorgesehen sein, dass mehrere der mobilen Rettungsgeräte mit dem externen Zusatzeingabemittel gekoppelt werden, wobei die externen Steuerbefehle des externen Zusatzeingabemittels auf alle damit gekoppelten mobilen Rettungsgeräte gleichzeitig wirken. Durch diese Maßnahme kann bei der Verwendung von mehreren mobilen Rettungsgeräten im Einsatzfall die Bewegung der einzelnen mobilen Rettungsgeräte zentral koordiniert werden, wodurch von einer Person, welche das Gesamtgeschehen im Überblick behalten kann, etwaige Gefahrenpotentiale bestmöglich erkannt und hintangehalten werden können.

In einer alternativen Ausführungsvariante ist es natürlich auch denkbar, dass mehrere der mobilen Rettungsgeräte mit dem externen Zusatzeingabemittel gekoppelt werden, wobei die externen Steuerbefehle des externen Zusatzeingabemittels wahlweise nur auf einzelne der damit gekoppelten mobilen Rettungsgeräte wirken.

In wieder einer anderen Ausführungsvariante ist es natürlich auch denkbar, dass mehrere der mobilen Rettungsgeräte mit dem externen Zusatzeingabemittel gekoppelt werden, wobei die externen Steuerbefehle des externen Zusatzeingabemittels auf auswählbare Gruppen der damit gekoppelten mobilen Rettungsgeräte wirken.

Vorteilhaft ist auch eine Ausprägung, gemäß welcher vorgesehen sein kann, dass das mobile Rettungsgerät seine Lage relativ zu einem verunfallten Fahrzeug erfasst, wobei der Arbeitsablauf des mobilen Rettungsgerätes auf Basis dieser Lageinformation erfolgt. Dies kann die Arbeitssicherheit bei der Manipulation eines verunfallten Fahrzeuges dadurch erhöhen, dass das mobile Rettungsgerät im Bereich von potentiellen Gefahrenstellen keine gefahrbringenden Manipulationen zulässt. Beispielsweise im Nahbereich von noch nicht ausgelösten Airbags bzw. der damit verbundenen Druckbehälter oder im Nahbereich der Batterien eines Elektroautos oder von spannungsführenden Bauteilen eines Elektroautos kann somit eine gefahrbringende Manipulation mittels des mobilen Rettungsgerätes unterbunden werden. Insbesondere kann hierbei vorgesehen sein, dass im verunfallten Fahrzeug Transponder angeordnet sind, mittels welchen die Lageinformation des mobilen Rettungsgerätes relativ zum verunfallten Fahrzeug erfasst werden können. Derartige Transponder können beispielsweise RFID-Chips sein. Die Transponder können beispielsweise bei der Herstellung des Fahrzeuges an vorgegebenen Stellen angeordnet werden. Weiters ist es auch denkbar, dass die Transponder nachträglich, nämlich im Einsatzfall beispielsweise von einem Einsatzleiter am Fahrzeug angeordnet werden können. Das mobile Rettungsgerät kann darauf programmiert sein, in einem vordefinierten Abstand zu einem gewissen Transponder keine oder nur eingeschränkte Funktionalität aufzuweisen.

Gemäß einer Weiterbildung ist es möglich, dass vom mobilen Rettungsgerät und/oder vom externen Zusatzeingabemittel Zustandsinformationen des verunfallten Fahrzeuges abgefragt werden, wobei der Arbeitsablauf des mobilen Rettungsgerätes auf Basis dieser abgefragten Zustandsinformationen erfolgt. Dies bringt den Vorteil mit sich, dass die Arbeitssicherheit beim Bergen des verunfallten Fahrzeuges weiter erhöht werden kann. Wenn beispielsweise das Stromnetz eines verunfallten Fahrzeuges weiterhin unter Spannung steht, kann dies auf den Arbeitsablauf des mobilen Rettungsgerätes Einfluss nehmen. Besonders in Kombination mit der Lageerfassung des mobilen Rettungsgerätes relativ zum verunfallten Fahrzeug lassen sich die Einsatzmöglichkeiten weiter erhöhen. So kann beispielsweise der Nahbereich eines Airbags als kritisch erkannt werden, in welchem das mobile Rettungsgerät nur eingeschränkt oder nicht funktioniert. Wenn jedoch vom mobilen Rettungsgerät die Information erhalten wird, dass der Airbag bereits ausgelöst ist, kann auch in diesem zuvor kritischen Bereich die volle Funktionalität des mobilen Rettungsgerätes bereitgestellt werden.

Insbesondere ist es denkbar, dass die Zustandsinformationen des verunfallten Fahrzeuges vom externen Zusatzeingabemittel nicht nur abgefragt werden und direkten Einfluss auf den Arbeitsablauf des mobilen Rettungsgerätes haben, sondern dass zusätzlich am externen Zusatzeingabemittel dem Bediener dieses externen Zusatzeingabemittels die Zustandsinformationen des verunfallten Fahrzeuges angezeigt werden können, wodurch der Bediener des externen Zusatzeingabemittels auf Basis dieser Information weitere Entscheidungen treffen kann, welche die Arbeitssicherheit der Rettungskräfte erhöht.

Ferner kann es zweckmäßig sein, wenn Zustandsinformationen des mobilen Rettungsgerätes, wie etwa Akkukapazität und/oder Wartungszyklen und/oder Fehlercodes, an das externe Zusatzeingabemittel übermittelt werden und von diesem angezeigt werden können, wobei der Arbeitsablauf des mobilen Rettungsgerätes auf Basis dieser abgefragten Zustandsinformationen erfolgt. Durch diese Maßnahme kann die Ausfallsicherheit der mobilen Rettungsgeräte erhöht werden. Wenn beispielsweise die Akkukapazität unter ein vorbestimmbares Niveau fällt, kann das mobile Rettungsgerät mittels des externen Zusatzeingabemittels automatisiert in einen Energiesparmodus versetzt werden, wodurch die Akkulaufzeit verlängert werden kann. Zusätzlich dazu kann am externen Zusatzeingabemittel ein Warnhinweis platziert werden, wodurch der Bediener des externen Zusatzeingabemittels einen neuen Akku bzw. ein neues mobiles Rettungsgerät anfordern kann. Darüber hinaus kann durch diese Maßnahmen die Wartung des mobilen Rettungsgerätes erleichtert werden.

Weiters ist es auch denkbar, dass mittels des externen Zusatzeingabemittels gewisse vordefinierte Kraftmaxima, welche im Normalzustand vom mobilen Rettungsgerät aufgebracht werden können, zumindest kurzzeitig außer Kraft gesetzt werden können, sodass unter Inkaufnahme der verkürzten Lebensdauer des mobilen Rettungsgerätes kritische Rettungseinsätze bestmöglich abgeschlossen werden können.

Darüber hinaus kann vorgesehen sein, dass am externen Zusatzeingabemittel Steuerungsprofile auswählbar sind, mittels welchen die Empfindlichkeit des Eingabemittels bzw. die Belegung von mehreren Eingabemitteln auf bestimmte Personengruppen eingestellt werden kann. Durch diese Maßnahme kann das mobile Rettungsgerät einfach an die Erfordernisse von bestimmten Personengruppen angepasst werden, wodurch die Arbeitssicherheit weiter erhöht werden kann. Beispielsweise ist es denkbar, dass durch diese Maßnahme das mobile Rettungsgerät an die Erfordernisse von Linkshänder bzw. Rechtshänder angepasst wird. Weiters ist es beispielsweise auch denkbar, dass durch diese Maßnahmen das mobile Rettungsgerät an die Erfordernisse von stärkeren Personen bzw. schwächeren Personen angepasst wird. Weiters ist es auch denkbar, dass durch diese Maßnahme das mobile Rettungsgerät an die Erfordernisse von Personengruppen mit mehr Erfahrung bzw. an die Erfordernisse von Personengruppen mit weniger Erfahrung angepasst wird.

Weiters kann vorgesehen sein, dass mittels des externen Zusatzeingabemittels eine am mobilen Rettungsgerät angeordnete Beleuchtung gesteuert wird. Durch diese Maßnahme kann der Bedienperson des mobilen Rettungsgerätes der Arbeitseinsatz erleichtert werden.

Gemäß einer besonderen Ausprägung ist es möglich, dass das externe Zusatzeingabemittel mit dem Internet verbunden wird, um die die Firmware der Steuerung des mobilen Rettungsgerätes mittels des externen Zusatzeingabemittels upzudaten. Durch diese Maßnahme kann die Firmware des mobilen Rettungsgerätes immer auf aktuellem Stand gehalten werden, sodass Weiterentwicklungen in der Firmware des mobilen Rettungsgerätes zeitnah und möglichst einfach auf die im Einsatz befindlichen mobilen Rettungsgeräte ausgerollt werden können. Insbesondere ist es hierbei auch denkbar, dass die Firmware von mehreren der mobilen Rettungsgeräte gleichzeitig oder nacheinander upgedatet wird.

Entsprechend einer vorteilhaften Weiterbildung kann vorgesehen sein, dass die globale Position des mobilen Rettungsgerätes erfasst wird und dass, sobald sich das mobile Rettungsgerät außerhalb eines vordefinierten Bewegungsradius befindet, das mobile Rettungsgerät gesperrt wird, und/oder eine Nachricht an ein vordefiniertes Empfangsgerät übermittelt wird, insbesondere dass mittels des externen Zusatzeingabemittels der vordefinierte Bewegungsradius festgelegt wird. Durch diese Maßnahme kann im Falle des Diebstahles des mobilen Rettungsgerätes dieses außer Funktion gesetzt werden, sodass mit dem mobilen Rettungsgerät keine weiteren strafbaren Handlungen, wie etwa das Aufbrechen eines Tresors oder Bankomats, erfolgen können. Durch die alternative oder zusätzliche Information auf das vordefinierte Empfangsgerät kann ein Diebstahl des mobilen Rettungsgerätes frühzeitig zur Anzeige gebracht werden. Darüber hinaus ist es auch denkbar, dass die globale Position des mobilen Rettungsgerätes am externen Zusatzeingabemittel angezeigt werden kann, sodass im Falle eines Diebstahls des mobilen Rettungsgerätes dieses einfach lokalisiert werden kann. Besonders wenn der Vordefinierte Bewegungsradius mittels externen Zusatzeingabemittels eingestellt bzw. angepasst wird, kann diese Diebstahlsicherung im Falle eines Großeinsatzes bzw. Assistenzeinsatzes außerhalb des üblichen Bewegungsradius deaktiviert werden, sodass den Einsatzkräften die Funktionalität des mobilen Rettungsgerätes auch in diesem Fall zur Verfügung steht. Für diesen Fall kann vorgesehen sein, dass die Eingabe eines Sicherheitscodes in das externe Zusatzeingabemittel notwendig ist, um den üblichen Bewegungsradius zu deaktivieren und somit eine Verwendung des mobilen Rettungsgerätes außerhalb dieses üblichen Bewegungsradius zu ermöglichen.

Weiters ist es auch denkbar, dass nach dem obig beschriebenen Sperren des mobilen Rettungsgerätes, dieses nur mittels des externen Zusatzeingabemittels wieder aktiviert werden kann. Insbesondere kann hierbei vorgesehen sein, dass die Eingabe eines Sicherheitscodes in das externe Zusatzeingabemittel notwendig ist, um das außer Kraft gesetzte mobile Rettungsgerät wieder zu reaktivieren und somit eine Verwendung des mobilen Rettungsgerätes von seinem rechtmäßigen Besitzer wieder zu ermöglichen.

Weiters ist es auch denkbar, dass zur Verwendung des externen Zusatzeingabemittels, dieses freigeschaltet werden muss. Dies kann beispielsweise durch Eingabe eines Codes erfolgen. In einer weiteren Ausführungsvariante ist es auch denkbar, dass das externe Zusatzeingabemittel mittels eines elektronischen Schlüssels, wie etwa einem RFID-Chip oder mittels eines Smartphones, beispielsweise durch NFC freigeschalten werden kann. Insbesondere ist es auch denkbar, dass einzelne Freischaltcodes oder einzelne Freischaltschlüssel einem Benutzer oder einer Benutzergruppe zugewiesen sind, wobei hierdurch verschiedene Berechtigungsrollen vergeben werden können.

Erfindungsgemäß ist ein Rettungssystem ausgebildet. Das Rettungssystem umfasst:
- Ein mobiles Rettungsgerät, insbesondere Spreizgerät, Schneidgerät oder Kombigerät mit Schneid- sowie Spreizfunktion, umfassend:
   - Einen Grundkörper mit einem Haltegriff,
   - Ein am Grundkörper angeordnetes Arbeitsmittel;
   - Eine Steuerung zum Steuern des Arbeitsablaufes des Arbeitsmittels;
   - Ein am Grundkörper angeordnetes Eingabemittel zum Eingeben von Steuerbefehlen in die Steuerung.

Weiters ist in externes Zusatzeingabemittel ausgebildet, welches vom mobilen Rettungsgerät baulich eigenständig ausgebildet ist und mittels eines Datenübertragungsmittels mit der Steuerung des mobilen Rettungsgerätes gekoppelt oder koppelbar ist. Weiters ist ein Antriebsmittel ausgebildet, welches zum Antrieb des Arbeitsmittels dient. Weiters kann vorgesehen sein, dass ein Energiespeicher bzw. eine Energiebereitstellungsvorrichtung ausgebildet ist, welche zum Bereitstellen der für das Antriebsmittel benötigten Energie dient.

Das erfindungsgemäße Rettungssystem bringt den Vorteil mit sich, dass durch das externe Zusatzeingabemittel in die Steuerung des mobilen Rettungsgerätes eingegriffen werden kann, wodurch sich der Bediener des mobilen Rettungsgerätes im Einsatzfall bestmöglich auf die ihm zugedachte Bergetätigkeit konzentrieren kann. Gleichzeitig kann das externe Zusatzeingabemittel von einer erfahrenen Person, wie etwa einem Einsatzleiter, bedient werden, welche die Gesamtheit des Bergeablaufes im Überblick behalten kann. Durch diese Maßnahmen kann die Arbeitssicherheit während der Bergung eines verunfallten Fahrzeuges erhöht werden. Darüber hinaus können durch diese Maßnahmen Rettungseinsätze koordinierter und schneller erfolgen, wodurch das Leben der im verunfallten Fahrzeug eingeklemmten Personen geschützt werden kann.

Ferner kann vorgesehen sein, dass das Datenübertragungsmittel eine erste Sendeeinheit aufweist, welche mit einer ersten Empfangseinheit gekoppelt oder koppelbar ist, wobei die erste Empfangseinheit mit der Steuerung gekoppelt ist und dass das Datenübertragungsmittel eine zweite Sendeeinheit aufweist, welche mit einer zweiten Empfangseinheit gekoppelt oder koppelbar ist, wobei die zweite Empfangseinheit mit der Steuerung gekoppelt ist. Durch diese Maßnahme kann erreicht werden, dass das Datenübertragungsmittel ausreichende Redundanz aufweist, um im Ausfall eines der beiden Sendeinheiten trotzdem noch eine ausreichend stabile Datenübertragung erreichen zu können. Dadurch kann die Arbeitssicherheit weiter erhöht werden.

Darüber hinaus kann vorgesehen sein, dass die erste Sendeeinheit und die zweite Sendeeinheit unterschiedliche Übertragungstechnologien aufweisen, insbesondere dass die erste Sendeeinheit für Direktübertragung, wie etwa Bluetooth oder WLAN ausgebildet ist, und dass die zweite Sendeeinheit für Übertragung mittels Mobilfunks ausgebildet ist. Durch diese Maßnahmen können die Nachteile einer einzelnen Übertragungstechnologie von den Vorteilen der weiteren und somit redundanten Übertragungstechnologie ausgeglichen werden. Wenn beispielsweise das externe Zusatzeingabemittel zu weit vom mobilen Rettungsgerät beabstandet ist, um eine Verbindung mittels Bluetooth oder WLAN aufzubauen, können die Daten mittels Mobilfunks übertragen werden. Wenn jedoch das mobile Rettungsgerät in einem Gebiet eingesetzt wird, in welchem das Mobilfunknetz keine oder nur eingeschränkte Konnektivität bietet, können die Daten mittels Direktübertragung, wie etwa Bluetooth oder WLAN, übertragen werden.

Vorteilhaft ist auch eine Ausprägung, gemäß welcher vorgesehen sein kann, dass das externe Zusatzeingabemittel in Form eines Tablets oder in Form eins Mobiltelefons ausgebildet ist, welches zum Anzeigen von Zustandsinformationen des mobilen Rettungsgerätes dient. Durch diese Maßnahme ist es möglich, dass ein Standardgerät, welches von vielen Rettungsorganisationen ohnehin mitgeführt wird, als externes Zusatzeingabemittel dient. Hierbei kann durch Installation eines Apps das Tablet bzw. Mobiltelefon seine Funktionalität des externen Zusatzeingabemittels erreichen.

In einer alternativen Ausführungsvariante kann auch vorgesehen sein, dass das externe Zusatzeingabemittel eigens für diese Aufgabe konzipiert bzw. gebaut wird und somit eine auf diese Aufgabe maßgeschneiderte Oberfläche aufweisen kann. Insbesondere ist es hierbei auch denkbar, dass am externen Zusatzeingabegerät beispielsweise eigene Schaltflächen für wichtige Funktionen, wie etwa Not-Halt, ausgebildet sind.

Weiters ist es auch denkbar, dass das externe Zusatzeingabemittel in Form einer Datenbrille oder als Digitales Visier ausgebildet ist. Darüber hinaus ist auch denkbar, dass zusätzlich zu einem wie obig beschrieben ausgebildeten externen Zusatzeingabemittel eine Datenbrille oder als Digitales Visier ausgebildet ist.

Weiters ist es auch denkbar, dass das externe Zusatzeingabemittel einen Vibrationserzeuger aufweist. Durch diesen Vibrationserzeuger kann der Bedienperson des externen Zusatzeingabemittels ein haptisches Warnsignal gegeben werden, wenn eine kritische Situation auftritt. Weiters ist es auch denkbar, dass durch diesen Vibrationserzeuger der Bedienperson Rückmeldung über die getätigten Eingaben gegeben wird.

Gemäß einer Weiterbildung ist es möglich, dass das Datenübertragungsmittel des externen Zusatzeingabemittels zum Herstellen einer Datenübertragungsverbindung mit einem verunfallten Fahrzeug ausgebildet ist. Dies bringt den Vorteil mit sich, dass die Arbeitssicherheit beim Bergen des verunfallten Fahrzeuges weiter erhöht werden kann. Wenn beispielsweise das Stromnetz eines verunfallten Fahrzeuges weiterhin unter Spannung steht, kann dies auf den Arbeitsablauf des mobilen Rettungsgerätes Einfluss nehmen. Besonders in Kombination mit der Lageerfassung des mobilen Rettungsgerätes relativ zum verunfallten Fahrzeug lassen sich die Einsatzmöglichkeiten weiter erhöhen. So kann beispielsweise der Nahbereich eines Airbags als kritisch erkannt werden, in welchem das mobile Rettungsgerät nur eingeschränkt oder nicht funktioniert, wenn jedoch vom mobilen Rettungsgerät die Information erhalten wird, dass der Airbag bereits ausgelöst ist, kann auch in diesem zuvor kritischen Bereich die volle Funktionalität des mobilen Rettungsgerätes bereitgestellt werden.

Ferner kann es zweckmäßig sein, wenn das mobile Rettungsgerät ein lokales Positionserfassungsmittel aufweist, mittels welchem die Lage des mobilen Rettungsgerätes relativ zu einem verunfallten Fahrzeug ermittelbar ist, insbesondere dass das lokale Positionserfassungsmittel zur Erfassung von im verunfallten Fahrzeug angeordneten Lagebestimmungsobjekten ausgebildet ist. Dies kann die Arbeitssicherheit bei der Manipulation eines verunfallten Fahrzeuges dadurch erhöhen, dass das mobile Rettungsgerät im Bereich von potentiellen Gefahrenstellen keine gefahrbringenden Manipulationen zulässt. Beispielsweise im Nahbereich von noch nicht ausgelösten Airbags bzw. der damit verbundenen Druckbehälter oder im Nahbereich der Batterien eines Elektroautos oder von spannungsführenden Bauteilen eines Elektroautos kann somit eine gefahrbringende Manipulation mittels des mobilen Rettungsgerätes unterbunden werden. Insbesondere kann hierbei vorgesehen sein, dass im verunfallten Fahrzeug Transponder angeordnet sind, mittels welchen die Lageinformation des mobilen Rettungsgerätes relativ zum verunfallten Fahrzeug erfasst werden können. Derartige Transponder können beispielsweise RFID-Chips sein. Die Transponder können bei der Herstellung des Fahrzeuges an vorgegebenen Stellen angeordnet werden, wobei das mobile Rettungsgerät darauf programmiert sein kann, in einem vordefinierten Abstand zu einem gewissen Transponder keine oder nur eingeschränkte Funktionalität aufzuweisen.

Darüber hinaus kann vorgesehen sein, dass das mobile Rettungsgerät ein globales Positionserfassungsmittel aufweist, mittels welchem die geographische Position des mobilen Rettungsgerätes ermittelbar ist. Durch diese Maßnahme kann im Falle des Diebstahles des mobilen Rettungsgerätes dieses außer Funktion gesetzt werden, sodass mit dem mobilen Rettungsgerät keine weiteren strafbaren Handlungen, wie etwa das Aufbrechen eines Tresors, erfolgen können. Durch die alternative oder zusätzliche Information auf das vordefinierte Empfangsgerät kann ein Diebstahl des mobilen Rettungsgerätes frühzeitig zur Anzeige gebracht werden. Darüber hinaus ist es auch denkbar, dass die globale Position des mobilen Rettungsgerätes am externen Zusatzeingabemittel angezeigt werden kann, sodass im Falle eines Diebstahls des mobilen Rettungsgerätes dieses einfach lokalisiert werden kann. Besonders wenn der Vordefinierungsradius mittels externen Zusatzeingabemittels eingestellt bzw. angepasst wird, kann diese Diebstahlsicherung im Falle eines Großeinsatzes bzw. Assistenzeinsatzes außerhalb des üblichen Bewegungsradius deaktiviert werden, sodass den Einsatzkräften die Funktionalität des mobilen Rettungsgerätes auch in diesem Fall zur Verfügung steht.

Weiters kann vorgesehen sein, dass am mobilen Rettungsgerät eine Kamera angeordnet ist, wobei die Bildinformationen der Kamera an das externe Zusatzeingabemittel übertragen werden können. Insbesondere kann vorgesehen sein, dass auf einem Display des externen Zusatzeingabemittels das von der Kamera erfasste Bild dargestellt wird. Weiters ist es auch denkbar, dass bei der Bilddarstellung am externen Zusatzeingabemittel dieses Bild durch digitale Informationen, wie etwa der Lage von Lagebestimmungsobjekten ergänzt wird. Somit kann die Bilddarstellung als Augmented Reality-darstellung ausgebildet sein.

Ein mobiles Rettungsgerät im Sinne dieses Dokumentes ist ein elektromechanisches oder elektrohydraulisches Arbeitsgerät für den portablen Rettungs-Einsatz wie z.B. ein Spreizgerät, Schneidgerät oder Kombigerät mit Schneid- sowie Spreizfunktion oder ein Hebezylinder (bzw. Rettungszylinder). Derartige Rettungsgeräte dienen vorzugsweise Rettungsorganisationen mit Bergetätigkeiten, wie etwa der Feuerwehr zur Unterstützung bei ihren Bergeeinsätzen, um etwa verletzte Personen aus verunfallen Fahrzeugen zu bergen. Die Rettungsgeräte können natürlich ebenso bei Bergeeinsätzen oder Sicherungseinsätzen in Gebäuden eingesetzt werden.

Weiters ist es auch denkbar, dass ein derartiges Rettungsgerät beispielsweise von der Polizei oder von einem Sondereinsatzkommando oder auch dem Militär eingesetzt wird, um etwa Wohnungstüren zu öffnen. Besonders bei derartigen Einsätzen kann es wichtig sein, dass die Beleuchtung des Arbeitsmittels erst aktiviert wird, wenn diese tatsächlich benötigt wird, um möglichst lange unerkannt zu bleiben. Diese bedarfsweise spätere Aktivierung kann mittels des externen Zusatzeingabemittels erfolgen.

Insbesondere kann vorgesehen sein, dass das Antriebsmittel in Form eines Hydraulikzylinders ausgebildet ist. Ein derart ausgebildetes Antriebsmittel kann beispielsweise durch ein Hydraulikaggregat mit Hydraulikflüssigkeit versorgt werden. Das Hydraulikaggregat kann hierbei vom mobilen Rettungsgerät gesondert ausgebildet sein und mittels eines Hydraulikschlauches mit dem mobilen Rettungsgerät gekoppelt sein.

Um einen von Stromgeneratoren bzw. Stromversorgungsnetzen autarken Betrieb zu ermöglichen, sind die Hydraulikaggregate zum Aktivieren der Arbeitsmittel vermehrt durch elektrochemische Energiespeicher, insbesondere durch Akkumulatoren, betreibbar. Weiters ist es auch denkbar, dass die Antriebsmittel direkt in Form von Elektromotoren ausgebildet sind.

Gattungsgemäße akkubetriebene Hydraulikaggregate für hydraulische Rettungswerkzeuge, welche Hydraulikaggregate von nur einer Person tragbar bzw. bedienbar sein sollen, sind von der Anmelderin in einer Mehrzahl von Ausführungen verfügbar. Das mobile Rettungsgerät kann durch möglichst ergonomisch an einem Grundkörper angebrachte Handgriffe bzw. Griffabschnitte von nur einer Person bedient und zweckgemäß eingesetzt werden.

Das Datenübertragungsmittel zum Koppeln des externen Zusatzeingabemittels mit dem am Grundkörper angeordneten Eingabemittel kann kabelgebunden oder auch kabellos ausgebildet sein.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung eines ersten Ausführungsbeispiels eines Rettungssystems mit einem mobilen Rettungsgerät und einem externen Zusatzeingabemittel;
- Fig. 2: eine schematische Darstellung eines ersten Ausführungsbeispiels eines Fahrzeuges und des Rettungssystems.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

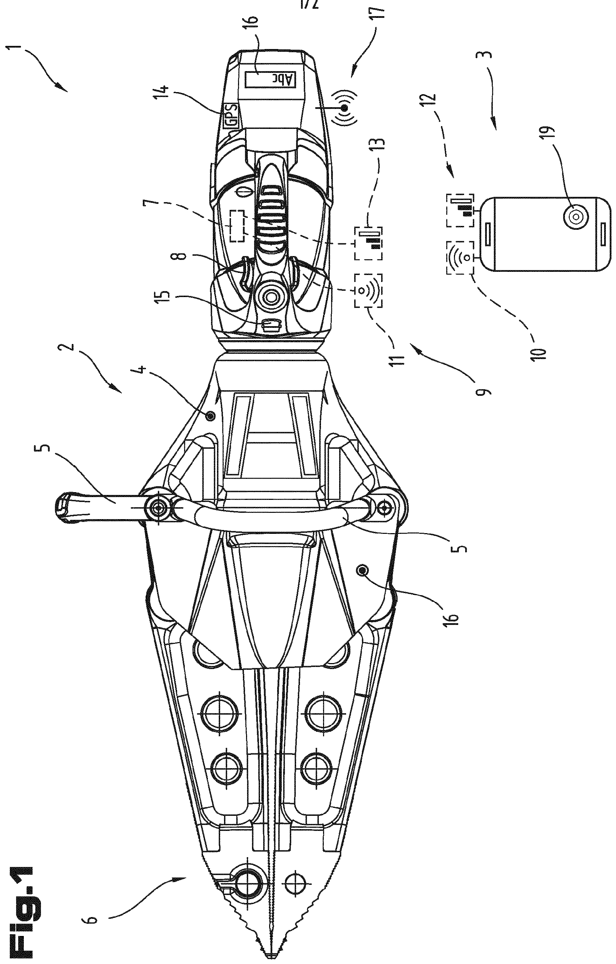

Fig. 1 zeigt ein erstes Ausführungsbeispiel eines Rettungssystems 1 mit einem mobilen Rettungsgerät 2 und einem externen Zusatzeingabemittel 3. Das mobile Rettungsgerät 2 umfasst einen Grundkörper 4 an welchem ein Haltegriff 5 angeordnet sein kann und an welchem Arbeitsmittel 6 angeordnet sind, die zur Manipulation im Rettungseinsatz dienen. Darüber hinaus umfasst das mobile Rettungsgerät 2 eine Steuerung 7, welche mit einem Eingabemittel 8 gekoppelt ist. Mittels der Steuerung 7 werden Steuerbefehle, welche durch einen Gerätebediener mittels des Eingabemittels 8 eingegeben werden, in entsprechende Signale umgewandelt um die Arbeitsmittel 6 des mobilen Rettungsgerätes 2 bewegen zu können.

Das mobile Rettungsgerät 2 umfasst darüber hinaus eine Energiebereitstellungseinheit, beispielsweise in Form eines Akkus, und eine Antriebseinheit, beispielsweise in Form eines Elektromotors.

Das mobile Rettungsgerät 2 des vorliegenden Ausführungsbeispiels ist in Form eines mobilen mit Akku betriebenen Rettungsgeräts ausgebildet. In einer weiteren, nicht dargestellten Ausführungsvariante ist es natürlich auch denkbar, dass das mobile Rettungsgerät 2 einen Grundkörper 4 aufweist, welcher beispielsweise mittels eines Hydraulikschlauches mit einer externen Antriebseinheit gekoppelt ist.

Das Rettungssystem 1 umfasst darüber hinaus ein Datenübertragungsmittel 9, mittels welchem Daten vom externen Zusatzeingabegerät 3 auf die Steuerung 7 des mobilen Rettungsgerätes 2 übertragen werden können. Das Datenübertragungsmittel 9 kann wie im vorliegenden Ausführungsbeispiel nach Fig. 1 ersichtlich, als drahtloses Datenübertragungsmittel 9 ausgebildet sein. In einer alternativen, nicht dargestellten Ausführungsvariante ist es natürlich auch denkbar, dass das externe Zusatzeingabemittel 3 mittels eines kabelgebundenen Datenübertragungsmittels 9 mit dem mobilen Rettungsgerät 2 gekoppelt ist.

Wie aus Fig. 1 weiters ersichtlich, kann vorgesehen sein, dass das Datenübertragungsmittel 9 eine erste Sendeeinheit 10 aufweist, welche mit dem externen Zusatzeingabemittel 3 gekoppelt ist. Weiters kann das Datenübertragungsmittel 9 eine erste Empfangseinheit 11 aufweisen, welche mit der Steuerung 7 des mobilen Rettungsgerätes 2 gekoppelt ist. Analog dazu kann eine zweite Sendeeinheit 12 ausgebildet sein, welche mit dem externen Zusatzeingabemittel 3 gekoppelt ist und mit einer zweiten Empfangseinheit 13 zusammenwirkt, welche mit der Steuerung 7 des mobilen Rettungsgerätes 2 gekoppelt ist.

Da die Datenübertragung nicht nur in eine Richtung, sondern bidirektional erfolgen kann, ist es natürlich auch denkbar, dass die Sendeeinheiten 10, 12 Datenpakete empfangen, welche von den Empfangseinheiten 11, 13 abgesandt werden. Darüber hinaus kann vorgesehen sein, dass das mobile Rettungsgerät 2 ein globales Positionserfassungsmittel 14 aufweist, mittels welchem die geografische Position des mobilen Rettungsgerätes 2 erfasst werden kann.

Darüber hinaus kann vorgesehen sein, dass das mobile Rettungsgerät 2 eine Beleuchtung 15 aufweist, welche zum Ausleuchten des Arbeitsbereiches während der Arbeit mit dem mobilen Rettungsgerät 2 dient. Insbesondere kann vorgesehen sein, dass die Beleuchtung 15 auf die Arbeitsmittel 6 gerichtet ist, um diese gut ausleuchten zu können. Weiters kann vorgesehen sein, dass die Beleuchtung 15 mittels eines Eingabemittels 8 direkt am mobilen Rettungsgerät 2 ein- und ausgeschaltet werden kann. Natürlich ist es hierbei denkbar, dass zum Einschalten der Beleuchtung 15 ein eigenes Eingabemittel 8 ausgebildet ist. In einer zusätzlichen Ausführungsvariante kann vorgesehen sein, dass die Beleuchtung 15 mittels des externen Zusatzeingabemittels 3 ein- und ausgeschaltet werden kann.

Weiters ist es auch denkbar, dass das mobile Rettungsgerät 2 eine Informationsanzeige 16 aufweist. Die Informationsanzeige 16 kann beispielsweise am Grundkörper 4 des mobilen Rettungsgerätes 2 angeordnet sein. Die Informationsanzeige 16 kann, wie aus Fig. 1 ersichtlich, in Form eines Displays ausgebildet sein, an welchem ein frei wählbarer Text oder Symbole angezeigt werden können.

In einer alternativen Ausführungsvariante ist es auch denkbar, dass die Informationsanzeige 16 als einfaches Anzeigemittel ausgebildet ist, welches beispielsweise in Form eines Lichtes ausgebildet ist.

Mittels der Informationsanzeige 16 kann dem Bediener des mobilen Rettungsgerätes 2 beispielsweise der Zustand des Akkus oder sonstige Informationen angezeigt werden.

In einer Weiterbildung ist es auch denkbar, dass mittels des externen Zusatzeingabemittels 3 Informationen an das mobile Rettungsgerät 2 übermittelt werden, welche mittels der Informationsanzeige 16 angezeigt werden. Somit ist es beispielsweise denkbar, dass der Gruppenkommandant eines Rettungseinsatzteams, welcher der Bediener des externen Zusatzeingabemittels 3 ist, mittels des externen Zusatzeingabemittels 3 eine Nachricht an die Informationsanzeige 16 übermittelt, um dem Bediener oder den Bedienern des Rettungsgerätes 2 beispielsweise Auskunft über die aktuelle Rettungssituation zu geben.

Weiters ist es denkbar, dass das mobile Rettungsgerät 2 ein lokales Positionserfassungsmittel 17 aufweist, welches zum Erfassen der Relativposition bzw. Relativausrichtung des mobilen Rettungsgeräts 2 zu einem oder mehreren Lagebestimmungsobjekten 18 dient.

Wie aus der schematischen Darstellung nach Fig. 1 ersichtlich, kann vorgesehen sein, dass das externe Zusatzeingabemittel 3 in Form eines Tablets oder in Form eines Mobiltelefons ausgebildet ist. Bei einem eigens für diesen Zweck als externes Zusatzeingabemittel 3 ausgebildeten Gerätes ist es auch denkbar, dass dieses eigens ausgebildete Eingabetaster aufweist, welche zur Befehlseingabe in das externe Zusatzeingabemittel 3 dienen. Beispielsweise kann vorgesehen sein, dass am externen Zusatzeingabemittel 3 ein Not-Halt-Taster 19 ausgebildet ist, mittels welchem im Bedarfsfall der Arbeitsablauf des mobilen Rettungsgerätes 2 gestoppt werden kann.

Weiters ist es auch denkbar, dass die Betriebsdaten des mobilen Rettungsgerätes 2 an das externe Zusatzeingabemittel 3 übermittelt werden und von diesem abgespeichert werden. In periodischen Abständen können die Betriebsdaten des mobilen Rettungsgerätes 2 ausgelesen und für weitere Datenverarbeitungszwecke herangezogen werden. Weiters ist es auch denkbar, dass die Betriebsdaten des mobilen Rettungsgerätes 2 auf das externe Zusatzeingabemittel 3 übertragen werden und über eine Datenanbindungsschnittstelle periodisch oder fortlaufend an einen zentralen Server übertragen werden. Hierbei ist es denkbar, dass die Betriebsdaten des mobilen Rettungsgerätes für die Entwicklung von neuen mobilen Rettungsgeräten, insbesondere für die Simulation des Lebenszyklus eines neuen mobilen Rettungsgerätes herangezogen werden, um die neu zu konstruierenden mobilen Rettungsgeräte in der Konstruktionsphase ausreichend fest dimensionieren zu können, sodass die Ausfallsicherheit der zu konstruierenden mobilen Rettungsgeräte verbessert wird. Insbesondere ist es hierbei vorteilhaft, wenn die Lage des mobilen Rettungsgerätes 2 bzw. die in den einzelnen Lagen auftretende Last mittels des externen Zusatzeingabemittels 3 aufgezeichnet wird, um aus diesen Berechnungen eine Steigerung der Bedienergonomie bzw. eine Effizienzsteigerung im Einsatzfall erreichen zu können.

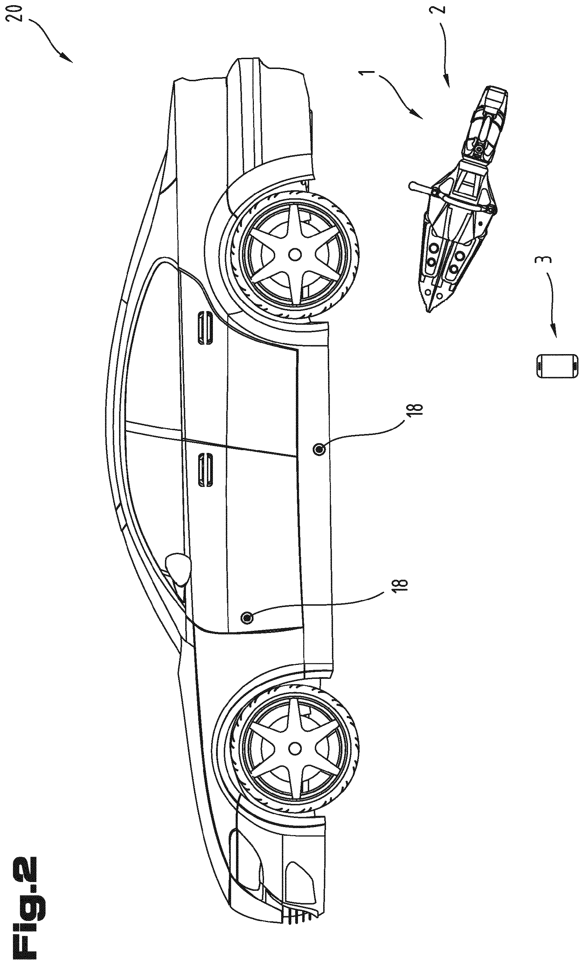

Fig. 2 zeigt eine schematische Darstellung eines ersten Ausführungsbeispiels eines Fahrzeuges 20 an welchem das Rettungssystem 1 zur Rettung von darin eingeklemmten Personen bzw. zur Bergung des verunfallten Fahrzeuges 20 eingesetzt werden kann. Wie aus Fig. 2 ersichtlich, kann vorgesehen sein, dass am Fahrzeug 20 eines oder mehrere der Lagebestimmungsobjekte 18 angeordnet sind, welche mit dem lokalen Positionserfassungsmittel 17 des mobilen Rettungsgerätes 2 zusammenwirken. Beispielsweise ist es denkbar, dass eines der Lagebestimmungsobjekte 18 im Bereich der Fahrzeugbatterie angeordnet ist, wobei die Funktion des mobilen Rettungsgerätes 2 außer Kraft gesetzt werden kann, wenn es sich in einem gewissen Nahbereich zu diesem Lagebestimmungsobjekt 18 befindet.

Der Schutzbereich ist durch die Ansprüche bestimmt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Rettungssystem
- 2: mobiles Rettungsgerät
- 3: externes Zusatzeingabemittel
- 4: Grundkörper
- 5: Haltegriff
- 6: Arbeitsmittel
- 7: Steuerung
- 8: Eingabemittel
- 9: Datenübertragungsmittel
- 10: erste Sendeeinheit
- 11: erste Empfangseinheit
- 12: zweite Sendeeinheit
- 13: zweite Empfangseinheit
- 14: globales Positionserfassungsmittel
- 15: Beleuchtung
- 16: Informationsanzeige
- 17: lokales Positionserfassungsmittel
- 18: Lagebestimmungsobjekt
- 19: Not-Halt-Taster
- 20: Fahrzeug

## Patentansprüche

1. Verfahren zum Betreiben eines Rettungssystems (1) mit einem mobilen Rettungsgerät (2), insbesondere Spreizgerät, Schneidgerät oder Kombigerät mit Schneid- sowie Spreizfunktion, wobei das mobile Rettungsgerät (2) einen Grundkörper (4) mit einem Arbeitsmittel (6), einem Haltegriff (5), einer Steuerung (7) und ein am Grundkörper (4) angeordnetes Eingabemittel (8) aufweist, wobei das Eingabemittel (8) zum Eingeben von Steuerbefehlen durch einen Bediener des mobilen Rettungsgerätes (2) in die Steuerung (7) ausgebildet ist, wobei ein externes Zusatzeingabemittel (3) ausgebildet ist, welches vom mobilen Rettungsgerät (2) baulich eigenständig ausgebildet ist und mittels eines Datenübertragungsmittels (9) mit der Steuerung (7) des mobilen Rettungsgerätes (2) gekoppelt oder koppelbar ist;
das Verfahren umfassend die Verfahrensschritte:
- Steuern des Arbeitsablaufes des mobilen Rettungsgerätes (2) durch Eingeben von Steuerbefehlen durch einen Bediener des mobilen Rettungsgerätes (2) in die Steuerung (7) mittels des am Grundkörper (4) angeordneten Eingabemittels (8),
wobei durch das externe Zusatzeingabemittel (3) mittels des Datenübertragungsmittels (9) externe Steuerbefehle in die Steuerung (7) eingegeben werden, wobei die externen Steuerbefehle zusätzlich zu den mittels des Eingabemittels (8) eingegebenen Steuerbefehlen den Arbeitsablauf des Arbeitsmittels (6) steuern oder den Zustand des mobilen Rettungsgerätes (2) verändern, **dadurch gekennzeichnet, dass** die Steuerung (7) derart konfiguriert ist, dass in einem Einsatzfall der Bediener mittels des am Grundkörper (4) angeordneten Eingabemittels (8) Steuerbefehle in die Steuerung (7) eingibt und gleichzeitig die externen Steuerbefehle von einer weiteren Person in das externe Zusatzeingabemittel (3) eingegeben werden, wobei das externe Zusatzeingabemittel in Echtzeit auf das mobile Rettungsgerät (2) einwirkt, so dass bei Auftreten einer Gefahr von der weiteren Person, welche den Überblick behält, in die Steuerung (7) eingegriffen wird wobei durch das Eingreifen mittels des Zusatzeingabemittels (3) trotz Betätigung des Eingabemittels (8) der Arbeitsablauf des mobilen Rettungsgerätes (2) unterbrochen wird.

2. Verfahren nach Anspruch 1, **dadurch gekennzeichnet, dass** die Steuerung (7) derart konfiguriert ist, dass mittels des Zusatzeingabemittels (3) die Geschwindigkeit des Arbeitsablaufes des mobilen Rettungsgerätes (2) angepasst wird.

3. Verfahren nach einem der vorhergehenden Ansprüche, **dadurch gekennzeichnet, dass** mehrere der mobilen Rettungsgeräte (2) mit dem externen Zusatzeingabemittel (3) gekoppelt werden, wobei die externen Steuerbefehle des externen Zusatzeingabemittels (3) auf alle damit gekoppelten mobilen Rettungsgeräte (2) gleichzeitig wirken.

4. Verfahren nach einem der vorhergehenden Ansprüche, **dadurch gekennzeichnet, dass** die Steuerung (7) derart konfiguriert ist, dass das mobile Rettungsgerät (2) seine Lage relativ zu einem verunfallten Fahrzeug (20) erfasst, wobei der Arbeitsablauf des mobilen Rettungsgerätes (2) auf Basis dieser Lageinformation erfolgt.

5. Verfahren nach einem der vorhergehenden Ansprüche, **dadurch gekennzeichnet, dass** die Steuerung (7) derart konfiguriert ist, dass vom mobilen Rettungsgerät (2) und/oder vom externen Zusatzeingabemittel (3) Zustandsinformationen des verunfallten Fahrzeuges (20) abgefragt werden, wobei der Arbeitsablauf des mobilen Rettungsgerätes (2) auf Basis dieser abgefragten Zustandsinformationen erfolgt.

6. Verfahren nach einem der vorhergehenden Ansprüche, **dadurch gekennzeichnet, dass** die Steuerung (7) derart konfiguriert ist, dass Zustandsinformationen des mobilen Rettungsgerätes (2), wie etwa Akkukapazität und/oder Wartungszyklen und/oder Fehlercodes, an das externe Zusatzeingabemittel (3) übermittelt werden und von diesem angezeigt werden können, wobei der Arbeitsablauf des mobilen Rettungsgerätes (2) auf Basis dieser abgefragten Zustandsinformationen erfolgt.

7. Verfahren nach einem der vorhergehenden Ansprüche, **dadurch gekennzeichnet, dass** die Steuerung (7) derart konfiguriert ist, dass am externen Zusatzeingabemittel (3) Steuerungsprofile auswählbar sind, mittels welchen die Empfindlichkeit des Eingabemittels (8) bzw. die Belegung von mehreren Eingabemitteln (8) auf bestimmte Personengruppen eingestellt werden kann.

8. Verfahren nach einem der vorhergehenden Ansprüche, **dadurch gekennzeichnet, dass** die Steuerung (7) derart konfiguriert ist, dass mittels des externen Zusatzeingabemittels (3) eine am mobilen Rettungsgerät (2) angeordnete Beleuchtung (15) gesteuert wird.

9. Verfahren nach einem der vorhergehenden Ansprüche, **dadurch gekennzeichnet, dass** das externe Zusatzeingabemittel (3) mit dem Internet verbunden wird, um die Firmware der Steuerung (7) des mobilen Rettungsgerätes (2) mittels des externen Zusatzeingabemittels (3) upzudaten.

10. Verfahren nach einem der vorhergehenden Ansprüche, **dadurch gekennzeichnet, dass** die Steuerung (7) derart konfiguriert ist, dass die globale Position des mobilen Rettungsgerätes (2) erfasst wird und dass, sobald sich das mobile Rettungsgerät (2) außerhalb eines vordefinierten Bewegungsradius befindet, das mobile Rettungsgerät (2) gesperrt wird, und/oder eine Nachricht an ein vordefiniertes Empfangsgerät übermittelt wird, insbesondere dass mittels des externen Zusatzeingabemittels (3) der vordefinierte Bewegungsradius festgelegt wird.

11. Rettungssystem (1), umfassend:
- Ein mobiles Rettungsgerät (2), insbesondere Spreizgerät, Schneidgerät oder Kombigerät mit Schneid- sowie Spreizfunktion, umfassend:
- Einen Grundkörper (4) mit einem Haltegriff (5),
- Ein am Grundkörper (4) angeordnetes Arbeitsmittel (6);
- Eine Steuerung (7) zum Steuern des Arbeitsablaufes des Arbeitsmittels (6);
- Ein am Grundkörper (4) angeordnetes Eingabemittel (8), wobei das Eingabemittel (8) zum Eingeben von Steuerbefehlen durch einen Bediener des mobilen Rettungsgerätes (2) in die Steuerung (7) ausgebildet ist;
wobei ein externes Zusatzeingabemittel (3) ausgebildet ist, welches vom mobilen Rettungsgerät (2) baulich eigenständig ausgebildet ist und mittels eines Datenübertragungsmittels (9) mit der Steuerung (7) des mobilen Rettungsgerätes (2) gekoppelt oder koppelbar ist, **dadurch gekennzeichnet, dass** die Steuerung (7) und das externe Zusatzeingabemittel (3) zum Durchführen der Verfahrensschritte nach einem der Ansprüche 1 bis 10 ausgebildet sind.

12. Rettungssystem (1) nach Anspruch 11, **dadurch gekennzeichnet, dass** das Datenübertragungsmittel (9) eine erste Sendeeinheit (10) aufweist, welche mit einer ersten Empfangseinheit (11) gekoppelt oder koppelbar ist, wobei die erste Empfangseinheit (11) mit der Steuerung (7) gekoppelt ist und dass das Datenübertragungsmittel (9) eine zweite Sendeeinheit (12) aufweist, welche mit einer zweiten Empfangseinheit (13) gekoppelt oder koppelbar ist, wobei die zweite Empfangseinheit (13) mit der Steuerung (7) gekoppelt ist.

13. Rettungssystem (1) nach Anspruch 12, **dadurch gekennzeichnet, dass** die erste Sendeeinheit (10) und die zweite Sendeeinheit (12) unterschiedliche Übertragungstechnologien aufweisen, insbesondere dass die erste Sendeeinheit (10) für Direktübertragung, wie etwa Bluetooth oder WLAN ausgebildet ist, und dass die zweite Sendeeinheit (12) für Übertragung mittels Mobilfunks ausgebildet ist.

14. Rettungssystem (1) nach einem der Ansprüche 11 bis 13, **dadurch gekennzeichnet, dass** das externe Zusatzeingabemittel (3) in Form eines Tablets oder in Form eins Mobiltelefons ausgebildet ist, welches zum Anzeigen von Zustandsinformationen des mobilen Rettungsgerätes (2) dient.

15. Rettungssystem (1) nach einem der Ansprüche 11 bis 14, **dadurch gekennzeichnet, dass** das Datenübertragungsmittel (9) des externen Zusatzeingabemittels (3) zum Herstellen einer Datenübertragungsverbindung mit einem verunfallten Fahrzeug (20) ausgebildet ist.

16. Rettungssystem (1) nach einem der Ansprüche 11 bis 15, **dadurch gekennzeichnet, dass** das mobile Rettungsgerät (2) ein lokales Positionserfassungsmittel (17) aufweist, mittels welchem die Lage des mobilen Rettungsgerätes (2) relativ zu einem verunfallten Fahrzeug (20) ermittelbar ist, insbesondere dass das lokale Positionserfassungsmittel (17) zur Erfassung von im verunfallten Fahrzeug (20) angeordneten Lagebestimmungsobjekten (18) ausgebildet ist.

17. Rettungssystem (1) nach einem der Ansprüche 11 bis 16, **dadurch gekennzeichnet, dass** das mobile Rettungsgerät (2) ein globales Positionserfassungsmittel (14) aufweist, mittels welchem die geographische Position des mobilen Rettungsgerätes (2) ermittelbar ist.

## Claims

1. A method for operating a rescue system (1) with a mobile rescue device (2), in particular a spreading device, a cutting device, or a combined device having a spreading and a cutting function, wherein the mobile rescue device (2) has a base body (4) with a working means (6), a handle (5), a controller (7) and an input means (8) arranged at the base body (4), wherein the input means (8) is configured for the input of control commands into the controller (7) by an operator of the mobile rescue device (2), wherein an external additional input means (3) is formed, which is structurally independent of the mobile rescue device (2) and coupled or couplable with the controller (7) of the mobile rescue device (2) by means of a data transmission means (9);
the method comprising the method steps:
- controlling the work sequence of the mobile rescue device (2) by inputting control commands into the controller (7) by an operator of the mobile rescue device (2) by means of the input means (8) arranged at the base body (4),
wherein via the external additional input means (3), by means of the data transmission means (9), external control commands are input into the controller (7), wherein the external control commands, in addition to the control commands input by means of the input means (8), control the work sequence of the working means (6) or change the state of the mobile rescue device (2), **characterized in that** the controller (7) is configured such that during an operation, the operator inputs control commands into the controller (7) by means of the input means (8) arranged at the base body (4) and, simultaneously, the external control commands are input into the external additional input means (3) by a further person, wherein the external additional input means acts on the mobile rescue device (2) in real time, such that, when a danger occurs, the further person, who maintains the overview, intervenes in the controller (7), wherein the intervention by means of the additional input means (3) interrupts the work sequence of the mobile rescue device (2) despite actuation of the input means (8).

2. The method according to claim 1, **characterized in that** the controller (7) is configured such that, by means of the additional input means (3), the speed of the work sequence of the mobile rescue device (2) is adjusted.

3. The method according to one of the preceding claims, **characterized in that** multiple of the mobile rescue devices (2) are coupled with the external additional input means (3), wherein the external control commands of the external additional input means (3) simultaneously act on all mobile rescue devices (2) coupled therewith.

4. The method according to one of the preceding claims, **characterized in that** the controller (7) is configured such that the mobile rescue device (2) detects its position relative to an accident vehicle (20), wherein the work sequence of the mobile rescue device (2) is carried out based on this position information.

5. The method according to one of the preceding claims, **characterized in that** the controller (7) is configured such that state information of the accident vehicle (20) is retrieved by the mobile rescue device (2) and/or by the external additional input means (3), wherein the work sequence of the mobile rescue device (2) is carried out based on this retrieved state information.

6. The method according to one of the preceding claims, **characterized in that** the controller (7) is configured such that state information of the mobile rescue device (2), such as battery capacity and/or maintenance cycles and/or error codes, are transmitted to the external additional input means (3) and can be displayed by it, wherein the work sequence of the mobile rescue device (2) is carried out based on this retrieved state information.

7. The method according to one of the preceding claims, **characterized in that** the controller (7) is configured such that, at the external additional input means (3), control profiles are selectable, by means of which the sensitiveness of the input means (8) and/or the assignment of multiple input means (8) to particular groups of persons may be set.

8. The method according to one of the preceding claims, **characterized in that** the controller (7) is configured such that, by means of the external additional input means (3), a lighting (15) arranged at the mobile rescue device (2) is controlled.

9. The method according to one of the preceding claims, **characterized in that** the external additional input means (3) is connected to the internet for updating the firmware of the controller (7) of the mobile rescue device (2) by means of the external additional input means (3).

10. The method according to one of the preceding claims, **characterized in that** the controller (7) is configured such that the global position of the mobile rescue device (2) is detected, and that, as soon as the mobile rescue device (2) is outside a predefined radius of movement, the mobile rescue device (2) is locked and/or a message is transmitted to a predefined receiver, in particular that the predefined radius of movement is determined by means of the external additional input means (3).

11. A rescue system (1), comprising:
- a mobile rescue device (2), in particular a spreading device, a cutting device, or a combined device having a spreading and a cutting function, comprising:
- a base body (4) with a handle (5),
- a working means (6) arranged at the base body (4);
- a controller (7) for controlling the work sequence of the working means (6);
- an input means (8) arranged at the base body (4), wherein the input means (8) is configured for the input of control commands into the controller (7) by an operator of the mobile rescue device (2);
wherein an external additional input means (3) is formed, which is structurally independent of the mobile rescue device (2) and coupled or couplable with the controller (7) of the mobile rescue device (2) by means of a data transmission means (9), **characterized in that** the controller (7) and the external additional input means (3) are configured to carry out the method steps according to one of claims 1 to 10.

12. The rescue system (1) according to claim 11, **characterized in that** the data transmission means (9) comprises a first transmission unit (10), which is coupled or couplable with a first reception unit (11), wherein the first reception unit (11) is coupled with the controller (7), and that the data transmission means (9) comprises a second transmission unit (12), which is coupled or couplable with a second reception unit (13), wherein the second reception unit (13) is coupled with the controller (7).

13. The rescue system (1) according to claim 12, **characterized in that** the first transmission unit (10) and the second transmission unit (12) have different transmission technologies, in particular that the first transmission unit (10) is configured for direct transmission, such as Bluetooth or WLAN, and that the second transmission unit (12) is configured for transmission via mobile radio.

14. The rescue system (1) according to one of claims 11 to 13, **characterized in that** the external additional input means (3) is configured as a tablet or a mobile phone, which serves for displaying state information of the mobile rescue device (2).

15. The rescue system (1) according to one of claims 11 to 14, **characterized in that** the data transmission means (9) of the external additional input means (3) is configured for establishing a data transmission connection to an accident vehicle (20).

16. The rescue system (1) according to one of claims 11 to 15, **characterized in that** the mobile rescue device (2) has a local position detection means (17), by means of which the position of the mobile rescue device (2) relative to an accident vehicle (20) is detectable, in particular that the local position detection means (17) is configured for detecting position determination objects (18) arranged in the accident vehicle (20).

17. The rescue system (1) according to one of claims 11 to 16, **characterized in that** the mobile rescue device (2) has a global position detection means (14), by means of which the geographic position of the mobile rescue device (2) is detectable.

## Revendications

1. Procédé de fonctionnement d'un système de sauvetage (1) avec un appareil de sauvetage mobile (2), plus particulièrement un appareil d'écartement, un appareil de découpe ou un appareil combiné avec fonction de découpe et d'écartement, dans lequel l'appareil de sauvetage mobile (2) comprend un corps de base (4) avec un équipement de travail (6), une poignée (5), une commande (7) et un moyen d'entrée (8) disposé sur le corps de base (4), dans lequel le moyen d'entrée (8) est conçu pour l'entrée d'instructions par un utilisateur de l'appareil de sauvetage mobile (2) dans la commande (7),
dans lequel un moyen d'entrée supplémentaire externe (3) est prévu, qui est constitué de manière autonome par l'appareil de sauvetage mobile (2) et qui est couplé ou peut être couplé à l'aide d'un moyen de transmission de données (9) avec la commande (7) de l'appareil de sauvetage mobile (2) ;
ce procédé comprenant les étapes suivantes :
- contrôle du déroulement du travail de l'appareil de sauvetage mobile (2) grâce à l'entrée d'instructions par un utilisateur de l'appareil de sauvetage mobile (2) dans la commande (7) à l'aide du moyen d'entrée (8) disposé sur le corps de base (4),
dans lequel le moyen d'entrée supplémentaire externe (3) permet d'entrer, à l'aide du moyen de transmission de données (9), des instructions externes dans la commande (7), dans lequel les instructions externes contrôlent, en plus des instructions entrées à l'aide du moyen d'entrée (8), le déroulement du travail de l'équipement de travail (6) ou modifient l'état de l'appareil de sauvetage mobile (2), **caractérisé en ce que** la commande (7) est configurée de façon à ce que, dans un cas d'utilisation, l'utilisateur entre les instructions dans la commande (7) à l'aide du moyen d'entrée (8) disposé sur le corps de base (4) et les instructions externes sont entrées simultanément par une autre personne dans le moyen d'entrée supplémentaire externe (3), dans lequel le moyen d'entrée supplémentaire externe agit en temps réel sur l'appareil de sauvetage mobile (2), de façon à ce que, lors de la survenue d'un danger, l'autre personne, qui garde une vue d'ensemble, intervienne dans la commande (7), dans lequel cette intervention à, l'aide du moyen d'entrée supplémentaire (3) interrompt le déroulement du travail de l'appareil de sauvetage mobile (2) malgré l'actionnement du moyen d'entrée (8).

2. Procédé selon la revendication 1, **caractérisé en ce que** la commande (7) est configurée de façon à ce que, le moyen d'entrée supplémentaire (3) adapte la vitesse du déroulement du travail de l'appareil de sauvetage mobile (2).

3. Procédé selon l'une des revendications précédentes, **caractérisé en ce que** plusieurs appareils de sauvetage mobiles (2) sont couplés avec le moyen d'entrée supplémentaire externe (3), dans lequel les instructions externes du moyen d'entrée supplémentaire externe (3) agissent simultanément sur tous les appareils de sauvetage mobiles (2) couplés.

4. Procédé selon l'une des revendications précédentes, **caractérisé en ce que** la commande (7) est configurée de façon à ce que l'appareil de sauvetage mobile (2) détecte sa position par rapport à un véhicule accidenté (20), dans lequel le déroulement du travail de l'appareil de sauvetage mobile (2) a lieu sur la base de cette information de position.

5. Procédé selon l'une des revendications précédentes, **caractérisé en ce que** la commande (7) est configurée de façon à ce que l'appareil de sauvetage mobile (2) et/ou le moyen d'entrée supplémentaire externe (3) interroge des informations d'état du véhicule accidenté (20), dans lequel le déroulement du travail de l'appareil de sauvetage mobile (2) a lieu sur la base de ces informations d'état interrogées.

6. Procédé selon l'une des revendications précédentes, **caractérisé en ce que** la commande (7) est configurée de façon à ce que des informations d'état de l'appareil de sauvetage mobile (2), comme la capacité des accumulateurs et/ou les cycles de maintenance et/ou les codes d'erreurs, soient transmises au moyen d'entrée supplémentaire externe (3) et puissent être affichées par celui-ci, dans lequel le déroulement du travail de l'appareil de sauvetage mobile (2) a lieu sur la base de ces informations d'état interrogées.

7. Procédé selon l'une des revendications précédentes, **caractérisé en ce que** la commande (7) est configurée de façon à ce que, sur le moyen d'entrée supplémentaire externe (3), des profils de commande puissent être sélectionnés, au moyen desquels la sensibilité du moyen d'entrée (8) ou l'attribution de plusieurs moyens d'entrée (8) à des groupes de personnes déterminés peuvent être réglés.

8. Procédé selon l'une des revendications précédentes, **caractérisé en ce que** la commande (7) est configurée de façon à ce que le moyen d'entrée supplémentaire externe (3) permet de contrôle un éclairage (15) disposé sur l'appareil de sauvetage mobile (2).

9. Procédé selon l'une des revendications précédentes, **caractérisé en ce que** le moyen d'entée supplémentaire externe (3) est relié à Internet, afin de mettre à jour le firmware de la commande (7) de l'appareil de sauvetage mobile (2) à l'aide du moyen d'entrée supplémentaire externe (3).

10. Procédé selon l'une des revendications précédentes, **caractérisé en ce que** la commande (7) est configurée de façon à ce que la position globalement de l'appareil de sauvetage mobile (2) soit détectée et à ce que, dès que l'appareil de sauvetage mobile (2) se trouve à l'extérieur d'un rayon de déplacement prédéfini, l'appareil de sauvetage mobile (2) soit bloqué, et/ou un message est transmis à un appareil de réception prédéfini, plus particulièrement de façon à ce que le moyen d'entrée supplémentaire externe (3) déterminé le rayon de déplacement prédéfini.

11. Système de sauvetage (1) comprenant :
- un appareil de sauvetage mobile (2), plus particulièrement un appareil d'écartement, un appareil de découpe ou un appareil combiné avec fonction de découpe et d'écartement, comprenant :
- un corps de base (4) avec une poignée (5),
- un équipement de travail (6) disposé sur le corps de base (4) ;
- une commande (7) pour le contrôle du déroulement du travail de l'équipement de travail (6) ;
- un moyen d'entrée (8) disposé sur le corps de base (4), dans lequel le moyen d'entrée (8) est conçu pour l'entrée d'instructions par un utilisateur de l'appareil de sauvetage mobile (2) dans la commande (7) ;
dans lequel un moyen d'entrée supplémentaire externe (3) est prévu, qui est qui est constitué de manière autonome par l'appareil de sauvetage mobile (2) et qui est couplé ou peut être couplé à l'aide d'un moyen de transmission de données (9) avec la commande (7) de l'appareil de sauvetage mobile (2), **caractérisé en ce que** la commande (7) et le moyen d'entrée supplémentaire externe (3) sont conçus pour l'exécution des étapes du procédé selon les revendications 1 à 10.

12. Système de sauvetage (1) selon la revendication 11, **caractérisé en ce que** le moyen de transmission de données (9) comprend une première unité émettrice (10) qui est couplée ou peut être couplée avec une première unité réceptrice (11), dans lequel la première unité réceptrice (11) est couplée avec la commande (7) et **en ce que** le moyen de transmission de données (9) comprend une deuxième unité émettrice (12), qui est couplée ou peut être couplée avec une deuxième unité réceptrice (13), dans lequel la deuxième unité réceptrice (13) est couplée avec la commande (7).

13. Système de sauvetage (1) selon la revendication 12, **caractérisé en ce que** la première unité émettrice (10) et la deuxième unité émettrice (12) présentent des technologies de transmission différentes, plus particulièrement **en ce que** la première unité émettrice (10) est conçue pour une transmission directe, comme Bluetooth ou WLAN, et **en ce que** la deuxième unité émettrice (12) est conçue pour une transmission par téléphonie mobile.

14. Système de sauvetage (1) selon l'une des revendications 11 à 13, **caractérisé en ce que** le moyen d'entrée supplémentaire externe (3) se présente sous la forme d'une tablette ou sous la forme d'un téléphone mobile qui permet l'affichage d'informations d'état de l'appareil de sauvetage mobile (2).

15. Système de sauvetage (1) selon l'une des revendications 11 à 14, **caractérisé en ce que** le moyen de transmission de données (9) du moyen d'entrée supplémentaire externe (3) est conçu pour l'établissement d'une liaison de transmission de données avec un véhicule accidenté (20).

16. Système de sauvetage (1) selon l'une des revendications 11 à 15, **caractérisé en ce que** l'appareil de sauvetage mobile (2) comprend un moyen de détection de position local (17) au moyen duquel la position de l'appareil de sauvetage mobile (2) par rapport à un véhicule accidenté (20) peut être déterminée, plus particulièrement **en ce que** le moyen de détection de position local (17) est conçu pour la détection d'objets de détermination de position (18) disposés dans le véhicule accidenté (20).

17. Système de sauvetage (1) selon l'une des revendications 11 à 16, **caractérisé en ce que** l'appareil de sauvetage mobile (2) comprend un moyen de détection de position global (14) au moyen duquel la position géographique de l'appareil de sauvetage mobile (2) peut être déterminée.
